# EUROPEAN PATENT SPECIFICATION

(11) **EP 2 157 748 B1**
(45) Date of publication and mention of the grant of the patent: **18.07.2012**
(21) Application number: 08800888.3
(22) Date of filing: 17.09.2008
(51) Int. Cl.: H04W 76/02

(54) **METHOD AND SYSTEM FOR PERFORMING SESSION SERVICE IN PACKET SWITCHED NETWORK**
VERFAHREN UND SYSTEM ZUR DURCHFÜHRUNG EINES SITZUNGSDIENSTES IN EINEM PAKETVERMITTELNDEN NETZ
PROCÉDÉ ET SYSTÈME POUR EFFECTUER UN SERVICE DE SESSION DANS UN RÉSEAU À COMMUTATION DE PAQUETS

(30) Priority: 21.09.2007 CN 200710152277
(43) Date of publication of application: 24.02.2010
(73) Proprietor: Huawei Technologies Co., Ltd., Longgang District, Shenzhen Guangdong 518129 (CN)
(72) Inventor: ZHU, Haopeng, Shenzhen Guangdong 518129 (CN)
(74) Representative: Isarpatent
(86) International application number: PCT/CN2008/072394
(87) International publication number: WO 2009/039767

(56) References cited:
- WO-A1-02/13149
- CN-A- 1 798 421
- CN-A- 1 805 430
- CN-A- 1 809 052
- US-A1- 2005 083 909
- "3rd Generation Partnership Project; Technical Specification Group Services and System Aspects; IP Multimedia System (IMS) centralized services (Release 8)" 3GPP STANDARD; 3GPP TR 23.892, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.1.0, 1 July 2007 (2007-07-01), pages 1-99, XP050364147

## Description

### Field of the Invention

The present invention relates to communication technologies, and in particular, to a method and system for implementing Packet Switched (PS) session services.

### Background of the Invention

The mobile communication technology has evolved from the first-generation (1G) analog mobile communication system to the second-generation (2G) digital mobile communication system, and is now developing toward the third-generation (3G) mobile communication system. The 2G is represented by the Global System for Mobile communications (GSM). The existing GSM network well fulfills the communication timeliness requirement of people, but has many problems: low spectrum utilization; inability of fulfilling the requirement for enormous communication capacity; inability of providing high-speed data or multimedia services cost-effectively, and inability of supporting the Internet services effectively.

The General Packet Radio Service (GPRS) is a GSM-based wireless packet switching technology, and provides peer-to-peer wireless IP connections in a wide area. To put it simply, the GPRS is a high-speed data processing technology, which transmits data by means of "packets". The GPRS is a technology that derives from the GSM and falls between the second-generation digital communication and the third-generation packet-switched mobile service, and is hence called "2.5G". The GPRS is widely applicable. For example, through a GPRS mobile terminal, a user can send and receive emails and browse the Internet.

Compared with the prior art, the 3G technology is superior in increasing the system capacity massively and improving the communication quality and the data transmission rate. Moreover, through the seamless roaming technology between different networks, the wireless communication system can be connected with the Internet to provide more diversified and superior services for mobile users. The wireless communication system processes images, music, and video streams quickly and conveniently, and provides various information services such as webpage browse, conference call, and e-commerce.

Currently, on the GPRS/3G wireless network, the Circuit Switched (CS) service is independent of the PS service. With the increase of the bandwidth in the PS domain, some CS and PS coupling services are provided. For example, when two users put through a call through the CS domain and one user expects to share video clips with the other, the sharing of video clips may be performed through the PS domain.

Before a user on the GPRS/3G network can perform a PS service, the Packet Data Protocol (PDP) context needs to be activated. Currently, because few PS domain users subscribe to a fixed IP address, few services are deployed to let the network activate the PDP context actively. In view of costs and overheads, it is not practicable that a mobile terminal is always online in the PS domain. Generally, if a mobile terminal performs a PS service, the PDP is activated manually on the mobile terminal, and the PDP context is deactivated after completion of the service.

To support the CS and PS coupling services on the GPRS/3G network, a real-time peer-to-peer notification mechanism should be available for triggering the peer mobile terminal to activate the PDP context.

"IP Multimedia System (IMS) centralized services (Release 8)" (3GPP STANDARD; 3GPP TR 23.892, XP050364147, published on July, 2007) disclose a method that a call destined to an ICS UE when the PS transport alternative for ICCC is used to support the setup of terminating sessions using standard CS Origination procedures for setting uup Bear Control Signalling Session, according to 6.5.2.2.2. A UE established a CS voice bearer after receiving INVITE from the network.

In the process of implementing the present invention, the inventor finds at least the following defect in the prior art:
The implementation of the solution in the prior art is complicated.

### Summary of the Invention

The embodiments of the present invention provide a method and system for implementing PS session services. By sending a message that carries a PS service indication, the system triggers a User Equipment (UE) to activate the PDP context. Therefore, the CS and PS coupling services can be deployed in real time.

A method for implementing PS session services is provided in an embodiment of the present invention. The method includes:
by a network, receiving a request from an originating party on a CS core network, where the request carries PS service request information;
sending a request to a terminating party according to the received request; and
receiving a response from the terminating party, and sending a response to the originating party according to the received response.

A computer program product is provided in an embodiment of the present invention. The computer program product includes computer program codes. When being executed by a computer, the computer program codes enable the computer to perform any step of the foregoing method for implementing PS session services.

A computer-readable storage medium for storing the computer program codes is provided in an embodiment of the present invention. When being executed by a computer, the computer program codes enable the computer to perform any step of the foregoing method for implementing PS session services.

A system for implementing PS session services is provided in an embodiment of the present invention. The system includes:
an originating party, adapted to send a request that carries PS service request information to a terminating party;
a CS domain entity on a network, adapted to: receive the request from the originating party and send a request to the terminating party according to the received request, receive a response from the terminating party and send a response to the originating party according to the received response; and
the terminating party, adapted to: receive the request sent by the CS domain entity on the network, respond to the request, generate a response and send the response to the CS domain entity on the network.

An originating UE for implementing PS session services is provided in an embodiment of the present invention. The originating UE includes:
a sending unit, adapted to send a request that carries PS service request information to a network entity; and
a receiving unit, adapted to receive a response, where the response is sent by the network entity according to a response received from a terminating UE.

A terminating UE for implementing PS session services is provided in an embodiment of the present invention. The terminating UE includes:
a receiving unit, adapted to receive a request, where the request is sent by a network entity according to a request received from an originating UE; and
a sending unit, adapted to send a response generated according to the request sent by the network entity.

### Brief Description of the Drawings

FIG. 1 shows a GPRS/3G network architecture in the prior art;
FIG. 2 is a flowchart of a method for implementing PS session services in a first embodiment of the present invention;
FIG. 3 is a flowchart of a method for implementing PS session services in a second embodiment of the present invention;
FIG. 4 shows a system for implementing PS session services in a third embodiment of the present invention;
FIG. 5 shows a system for implementing PS session services when the originating party and the terminating party belong to the same network in the third embodiment of the present invention;
FIG. 6 shows a system for implementing PS session services when the originating party and the terminating party belong to different networks in the third embodiment of the present invention;
FIG. 7 shows an architecture diagram of an originating UE in a fourth embodiment of the present invention; and
FIG. 8 shows an architecture diagram of a terminating UE in a fifth embodiment of the present invention.

### Detailed Description of the Embodiments

The embodiments of the present invention are detailed below with reference to the accompanying drawings.

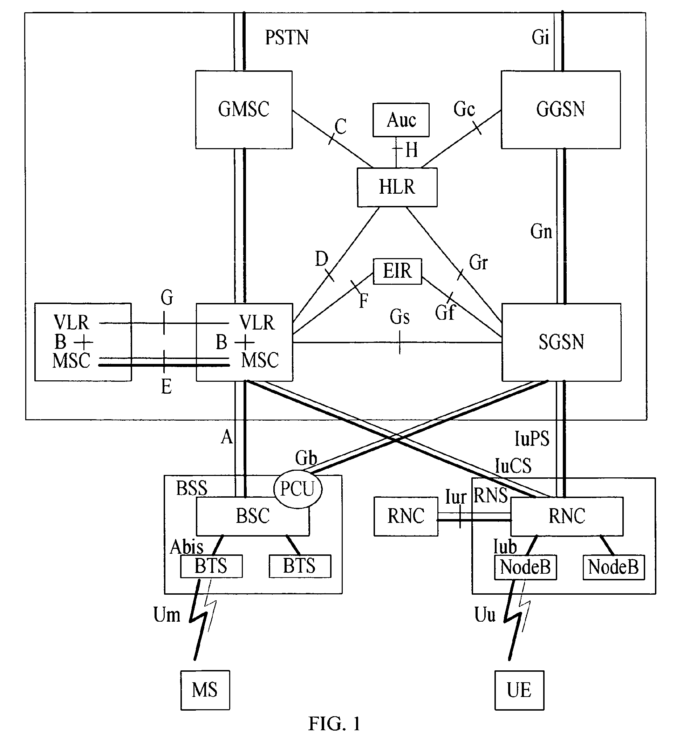

FIG. 1 is a GPRS/3G network architecture, which is employed at the early stage of the 3G network and is compatible with the 2G GSM/GPRS mobile communication system and the 3G mobile communication system.

Currently, on the GPRS/3G wireless network, the CS service is independent of the PS service. With the increase of the bandwidth in the PS domain, some CS and PS coupling services are provided. For example, when two users put through a call through the CS domain and one user expects to share video clips with the other, the sharing of video clips may be performed through the PS domain.

Before a user on the GPRS/3G network performs a PS service, the Packet Data Protocol (PDP) context needs to be activated. Currently, because few PS domain users subscribe to a fixed IP address, few services are deployed to for the network to activate the PDP context. In view of costs and overheads, it is not practicable that a mobile terminal is always online in the PS domain. Generally, if a mobile terminal performs a PS service, the PDP is activated manually on the mobile terminal, and the PDP context is deactivated after completion of the service.

To support the CS and PS coupling services on the GPRS/3G network, a real-time peer-to-peer notification mechanism should be available for triggering the peer mobile terminal to activate the PDP context.

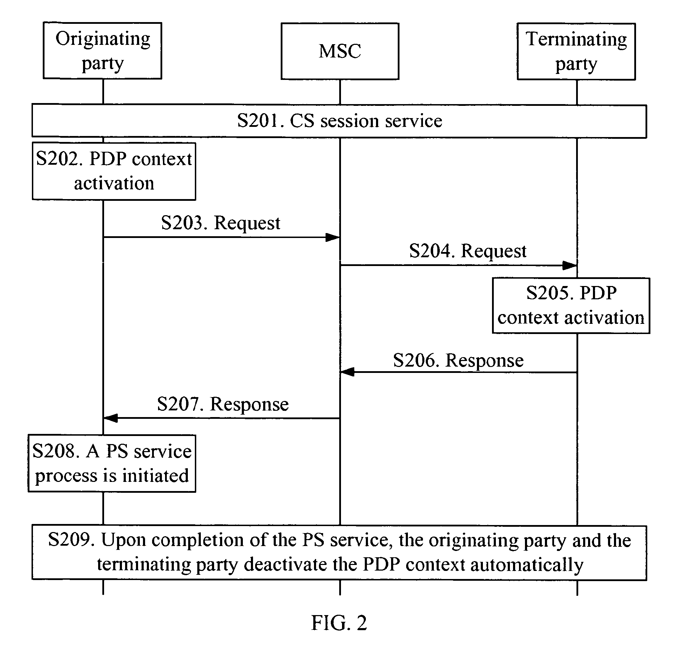

In the first embodiment of the present invention, it is assumed that the originating party and the terminating party belong to the same Mobile Switching Center (MSC) in the CS domain. As shown in FIG. 2, a method for implementing PS session services includes the following steps:
Step S201: The originating party performs a CS session service with the terminating party.
Step S202: The originating party activates the PDP context.
Step S203: The originating party sends a request to the MSC. The field of the request is extended to carry a PS service indication.
Step S204: After receiving the request from the originating party, the MSC directly sends the request to the terminating party indicated by the PS service indication.
Step S205: After receiving the request, the terminating party responds to the PS service indication in the request, and activates the PDP context.
Step S206: The terminating party sends a response to the MSC.
Step S207: After receiving the response from the terminating party, the MSC sends the response to the originating party directly.
Step S208: After receiving the response, the originating party initiates a PS service process.
Step S209: After completion of the PS service, the originating party and the terminating party deactivate the PDP context automatically.

By using the method provided in this embodiment, when the user performs a CS session service, a message that carries a PS service indication is sent to trigger the UE to activate the PDP context. Therefore, the CS and PS coupling services can be deployed in real time and more diversified and superior services are available to a mobile user.

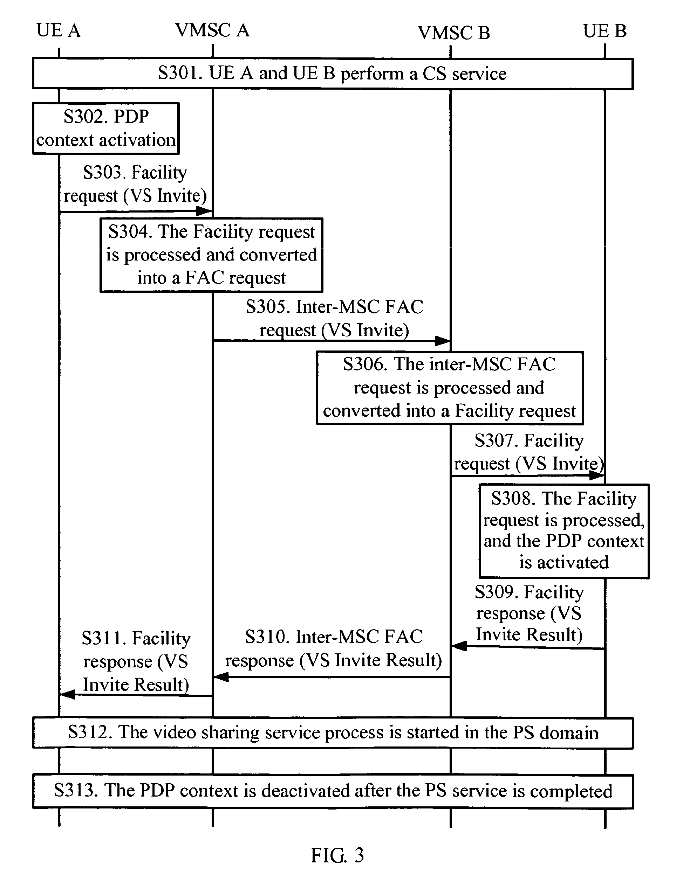

In the second embodiment of the present invention, it is assumed that the originating party and the terminating party belong to different MSCs in the CS domain. As shown in FIG. 3, a method for implementing PS session services includes the following steps:
Step S301: UE A performs a CS session service with UE B.
Step S302: UE A activates the PDP context. Through the PDP context activation, the Gateway GPRS Support Node (GGSN) authenticates UE A and allocates the corresponding IP address, and sets up a data channel between the UE and the GPRS-based 3G PS domain.

Specifically, the PDP activation process is initiated by the UE. First, the UE sends a PDP context activation request to the SGSN, where the request carries information such as an Access Point Name (APN) and Quality of Service (QoS). The SGSN searches the Home Location Register (HLR) for the address of the GGSN according to the APN carried in the request. After obtaining the address of the GGSN, the SGSN sends a PDP context creation request to the GGSN. The GGSN authenticates the UE, allocates the IP address or address prefix and other parameters, adds the authentication result and the parameters to a PDP context creation response, and sends the response to the SGSN. The SGSN sends a message indicating that the PDP context activation request is accepted to the UE, and transmits the parameters that are set to the UE. In this way, the PDP activation process is completed. Therefore, a data channel is set up between the UE and the GPRS-based 3G PS domain.
Step S303: After activating the PDP context, UE A sends a Facility request to the Visited Mobile Switching Center (VMSC) that serves UE A. The request carries "VS Invite" (that is, a video sharing invitation indication).

Specifically, a field of the Facility request in the existing Direct Transfer Application Part (DTAP) is extended to carry the VS Invite, which triggers the network to initiate a PS service. The Facility request may be extended in many ways. For example, the value of the Operation Code is extended to carry the VS Invite.
Step S304: VMSC A receives the Facility request and processes it, obtains the VS Invite carried in the Facility request, and judges whether both UE A and UE B belong to VMSC A. If both UE A and UE B belong to VMSC A, VMSC A sends the Facility request to UE B directly; if UE B does not belong to VMSC A, the process proceeds to step S305.
Step S305: VMSC A converts the Facility request into an inter-MSC signaling FAC request of an ISUP/BICC, and extends an information element of the FAC request to carry the VS Invite. VMSC A sends the FAC request to VMSC B that serves UE B.

If no relay device exists between VMSC A and VMSC B, VMSC A sends the FAC request to VMSC B directly; if any relay device exists between VMSC A and VMSC B, the relay device does not process the received FAC request and transmits it transparently.
Step S306: VMSC B receives the FAC request and processes it, obtains the VS Invite carried in the FAC request, and converts the FAC request into a Facility request.

In step S304 and step S306, the VMSC that serves UE A and UE B may allow or disallow the video sharing service according to the subscription information. This embodiment assumes that both UE A and UE B have subscribed to the video sharing service. After the operation succeeds, the VMSC that serves UE A and UE B can provide the charging information corresponding to this service.
Step S307: VMSC B sends the Facility request to UE B, and extends the Facility request to carry the VS Invite.
Step S308: UE B receives the Facility request and processes it, obtains the information about the originating UE A and the VS Invite in the request, and then activates the PDP context.

In this step, information may be set on UE B, where the information is about whether to prompt the user to make a confirmation or accept the service request of the originating party by default.
Step S309: After the PDP context is activated successfully, UE B sends a Facility response that carries the VS Invite operation result to VMSC B that serves UE B.
Step S310: VMSC B converts the Facility response into a FAC response and sends it to VMSC A.
Step S311: After receiving the FAC response, VMSC A converts the FAC response into a Facility response, and sends the Facility response to UE A. The response carries the VS Invite operation result.
Step S312: UE A receives the Facility response, obtains the VS Invite operation result carried in the response, confirms success of triggering the video sharing invitation, and initiates the video sharing service process in the PS domain. The video sharing service process is based on a Session Initiation Protocol (SIP) and an SIP server, or based on another protocol and another server.
Step S313: After completion of the video sharing service, UE A and UE B deactivate the PDP context automatically.

The deactivation of the PDP context by the UE is bound to the CS call or exists independently. When the deactivation exists independently, even if the CS service is completed, the PS service can continue, for example, implement the functions such as PS multimedia live broadcast.

The UE in the foregoing embodiment may be a mobile terminal or a service platform. For example, a service platform initiates a call to a mobile terminal; after the mobile terminal plays the announcement and the user makes a confirmation (or the user answers the call automatically), the service platform sends a Facility/FAC message to activate the PS service of the opposite party actively. The implementation process is similar to the foregoing description.

The application of the present invention is not limited to the video sharing service, but covers many information services such as webpage browse, conference call, and e-commerce. The implementation process of such services is similar to the implementation process of the video sharing service.

By using the method provided in the foregoing embodiment, when the user performs a CS session service, a message that carries a PS service indication is sent to trigger the UE to activate the PDP context. Therefore, the CS and PS coupling services can be deployed in real time and more diversified and superior services are available to a mobile user.

A computer program product is provided in an embodiment of the present invention. The computer program product includes computer program codes. When being executed by a computer, the computer program codes enable the computer to perform any step of the foregoing method for implementing PS session services.

A computer-readable storage medium for storing the computer program codes is provided in an embodiment of the present invention. When being executed by a computer, the computer program codes enable the computer to perform any step of the foregoing method for implementing PS session services.

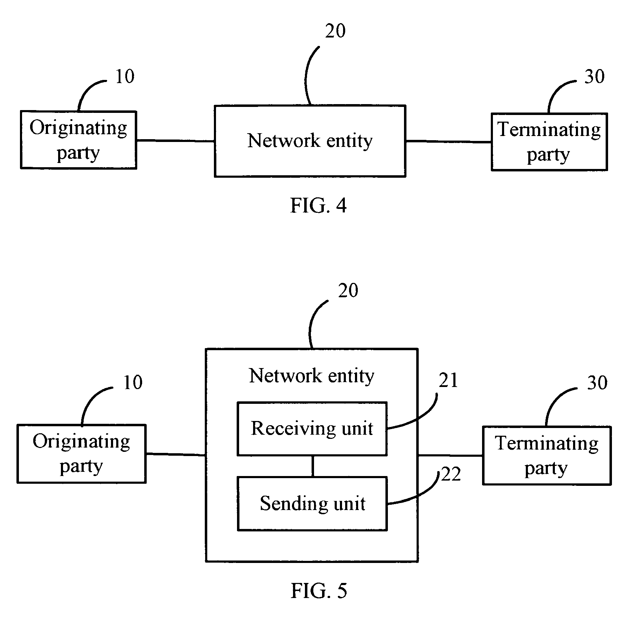

A system for implementing PS session services is provided in the third embodiment of the present invention. As shown in FIG. 4, the system includes an originating party 10, at least one network entity 20, and a terminating party 30. The network entity 20 is located on a CS core network.

Specifically, the originating party 10 is adapted to send a request to the terminating party. The network entity 20 is adapted to: send a request to the terminating party 30 according to the received request after receiving a request from the originating party 10, and send a response to the originating party 10 according to the received response after receiving a response from the terminating party 30. The terminating party 30 is adapted to: receive the request sent by the network entity 20, respond to the PS service indication carried in the request, generate a response and send the response to the network entity 20.

If the originating party 10 and the terminating party 30 belong to the same network entity 20, the system structure is shown in FIG. 5, and the network entity 20 further includes:
a receiving unit 21, adapted to: receive the message sent by the originating party 10 or the terminating party 30, and send the message to a sending unit 22; and
the sending unit 22, adapted to: receive the message from the receiving unit 21 and send the message to the terminating party 30 or the originating party 10.

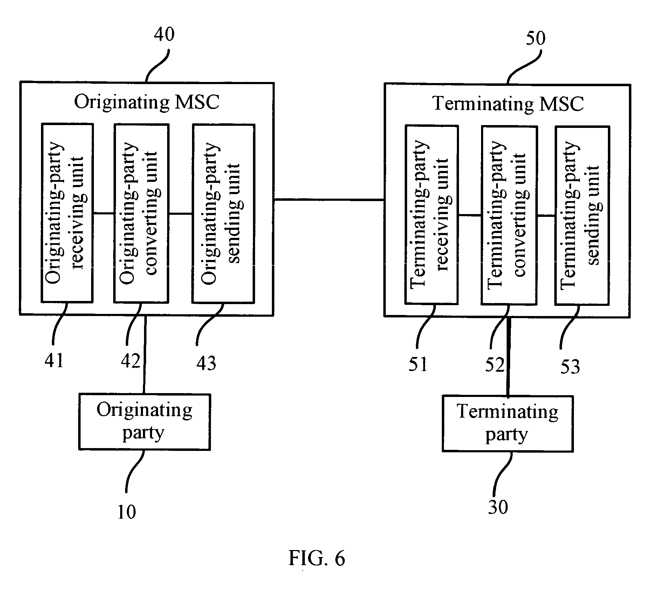

When the originating party 10 and the terminating party 30 belong to different network entities, the system structure is shown in FIG. 6, and the network entity includes:
an originating MSC 40, adapted to: receive the request from the originating party 10, generate an inter-MSC request according to the received request and send the inter-MSC request to a terminating MSC 50 that serves the terminating party 30; receive the inter-MSC response from the terminating MSC 50, obtain the response from the terminating party 30 according to the inter-MSC response and send the response of the terminating party 30 to the originating party 10; and
the terminating MSC 50, adapted to: receive the inter-MSC request from the originating MSC 40, obtain the request of the originating party 10 according to the inter-MSC request, and send the request of the originating party 10 to the terminating party 30; receive the response from the terminating party 30, generate an inter-MSC response according to the received response and send the inter-MSC response to the originating MSC 40.

The originating MSC 40 further includes:
an originating-party receiving unit 41, adapted to: receive the message sent by the originating party 10 or the terminating MSC 50, and send the message to an originating-party converting unit 42;
the originating-party converting unit 42, adapted to: convert the received request into an inter-MSC request, or convert the inter-MSC response into a response, and send the request or response to the terminating MSC 50; and
an originating-party sending unit 43, adapted to send the message received from the originating-party converting unit 42 to the terminating MSC 50 or the originating party 10.

The terminating MSC 50 further includes:
a terminating-party receiving unit 51, adapted to: receive the message sent by the terminating party 30 or the originating MSC 40, and send the message to a terminating-party converting unit 52;
the terminating-party converting unit 52, adapted to: convert the received inter-MSC request into a request, or convert the received response into an inter-MSC response, and send the request or response to the terminating party 30 or the originating MSC 40; and
a terminating-party sending unit 53, adapted to send the message received from the terminating-party converting unit 52 to the terminating party 30 or the originating MSC 40.

Through the system provided in the foregoing embodiment, when the user performs a CS session service, a message that carries a PS service request is sent to trigger the UE to activate the PDP context. Therefore, the CS and PS coupling services can be deployed in real time and more diversified and superior services are available to a mobile user.

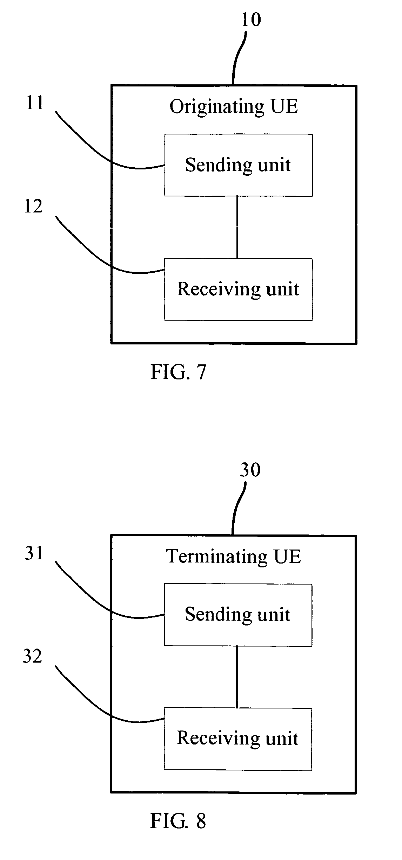

An originating UE 10 for implementing PS session services is provided in the fourth embodiment of the present invention. As shown in FIG. 7, the originating UE 10 includes:
a sending unit 11, adapted to send a request that carries PS service request information to a network entity 20; and
a receiving unit 12, adapted to receive a response which is sent by the network entity 20 according to a response received from a terminating UE 30.

The request and the response are Facility messages; the message field of the request is extended to carry a PS service indication; and the message field of the response is extended to carry a response to the PS service indication.

Through the originating UE provided in the foregoing embodiment, when the user performs a CS session service, a message that carries a PS service request is sent to trigger the UE to activate the PDP context. Therefore, the CS and PS coupling services can be deployed in real time and more diversified and superior services are available to a mobile user.

A terminating UE 30 for implementing PS session services is provided in the fifth embodiment of the present invention. As shown in FIG. 8, the terminating UE 30 includes:
a receiving unit 31, adapted to receive a request which is sent by the network entity 20 according to a request received from an originating UE 10; and
a sending unit 32, adapted to send a response generated according to the request sent by the network entity 20.

The request and the response are Facility messages; the message field of the request is extended to carry a PS service indication; and the message field of the response is extended to carry a response to the PS service indication.

Through the terminating UE provided in the foregoing embodiment, when the user performs a CS session service, a message that carries a PS service request is sent to trigger the UE to activate the PDP context. Therefore, the CS and PS coupling services can be deployed in real time and more diversified and superior services are available to a mobile user.

Through the foregoing embodiments, those skilled in the art can clearly understand that the present invention may be implemented through hardware, or through software in addition to a necessary universal hardware platform. The technical solution of the present invention may be embodied as a software product. The software product may be stored in a computer-readable storage medium (such as a CD-ROM, a USB disk, or a mobile hard disk), and may include several instructions that enable a computer device (such as a personal computer, a server, or a network device) to perform the methods provided in the embodiments of the present invention.

Described above are only exemplary embodiments of the present invention, but not intended to limit the scope of the present invention. Any modification, equivalent replacement, and improvement made without departing from the principle of the present invention fall within the scope of the present invention.

## Claims

1. A method for implementing Packet Switched, PS, session services, comprising:
by a network, receiving a request from an originating party in a Circuit Switched, CS, core network, wherein the request carries PS service request information;
sending a request to a terminating party according to the received request;
activating, by the terminating party, a Packet Data Protocol, PDP, context after the terminating party receives the request sent by the network; and
receiving a response from the terminating party, and sending a response to the originating party according to the received response;
wherein if the terminating party and the originating party belong to different MSCs in a CS domain, the network sends the request to the terminating party indicated by a PS service indication according to the request in the following way:
an originating MSC that serves the originating party generates an inter-MSC request according to the request, and sends the inter-MSC request to a terminating MSC that serves the terminating party; wherein a message field of the inter-MSC request is extended to carry the PS service indication;
the network receives the response sent by the germinating party and sends the response to the originating party according to the received response in the following way:
the originating MSC receives an inter-MSC response sent by the terminating MSC; and
the originating MSC generates the response of the terminating party according to the inter-MSC response, and sends the response of the terminating party to the originating party.

2. The method of claim 1, wherein:
the request and the response are Facility messages; a message field of the request is extended to carry a PS service indication; and a message field of the response is extended to carry a response to the PS service indication.

3. The method of claim 1, wherein before the originating MSC receives the inter-MSC response sent by the terminating MSC, the method further comprises:
receiving, by the terminating MSC, the inter-MSC request sent by the originating MSC;
obtaining, by the terminating MSC, the request of the originating party according to the inter-MSC request, and sending the request of the originating party to the terminating party; and
generating, by the terminating MSC, the inter-MSC response according, to the response sent by the terminating party, and sending the inter-MSC response to the originating MSC.

4. The method of claim 3, wherein:
the inter-MSC request and the inter-MSC response are FAC messages; a message field of the inter-MSC response is extended to carry a response to the PS service indication.

5. The method of claim 1, wherein before the network receives the request from the originating party, the method further comprises:
activating, by the originating party, a Packet Data Protocol, PDP, context, and setting up a data channel between the originating party and a PS domain.

6. The method of claim 1, wherein after the network receives the request from the originating party, the method further comprises:
judging, by the network, whether the PS service is allowed according to subscription information of the originating party, continuing with the PS service if the service is allowed or ending the PS service if the service is not allowed; or providing charging information after the PS service is set up successfully.

7. The method of claim 1, further comprising:
initiating, by the originating party, a process of the PS service after receiving the response; and
deactivating, by the originating party and the terminating party, a Packet Data Protocol, PDP context automatically after completion of the PS service.

8. A system for implementing Packet Switched, PS, session services, comprising:
an originating party (10), configured to send a request that carries PS service request information to a terminating party (30);
a Circuit Switched, CS, domain entity on a network (20), configured to receive the request from the originating party (10), and send a request to the terminating party (30) according to the received request; receive a response from the terminating party (30), and send a response to the originating party (10) according to the received response; and
the terminating party (30), configured to receive the request sent by the CS domain entity on the network (20), and activate a Packet Data Protocol, PDP, context after receiving the request sent by the CS domain entity on the network (20); respond to the request, generate a response and send the response to the CS domain entity on the network (20);
wherein if the terminating party (30) and the originating party (10) belong to different MSCs in a CS domain, the network (20) sends the request to the terminating party indicated by a PS service indication according to the request in the following way:
an originating MSC that serves the originating party generates an inter-MSC request according to the request, and sends the inter-MSC request to a terminating MSC that serves the terminating party; wherein a message field of the inter-MSC request is extended to carry the PS service indication;
the network (20) receives the response sent by the terminating party (30) and sends the response to the originating party (10) according to the received response in the following way:
the originating MSC receives an inter-MSC response sent by the terminating MSC; and
the originating MSC generates the response of the terminating party (30) according to the inter-MSC response, and sends the response of the terminating party (30) to the originating party (10).

9. The system of claim 8, wherein:
the request and the response are Facility messages; a message field of the request is extended to carry a PS service indication; and a message field of the response is extended to carry a response to the PS service indication.

10. The system of claim 8, wherein:
the originating party (10), further configured to activate a PDP context, and set up a data channel between the originating party (10) and a PS domain, before the originating party (10) sending the request to the terminating party (30).

## Patentansprüche

1. Verfahren zum Implementieren von paketvermittelten Sitzungsdiensten, PS-Sitzungsdiensten, das Folgendes umfasst:
durch ein Netz Empfangen einer Anforderung von einem Ausgangsteilnehmer in einem schaltungsvermittelten Kernnetz, CS-Kernnetz, wobei die Anforderung PS-Dienstanforderungsinformationen transportiert;
Senden einer Anforderung zu einem Endteilnehmer in Übereinstimmung mit der empfangenen Anforderung;
Aktivieren durch den Endteilnehmer eines Paketdatenprotokoll-Kontexts, PDP-Kontexts, nachdem der Endteilnehmer die durch das Netz gesendete Anforderung empfangen hat; und
Empfangen einer Antwort von dem Endteilnehmer und Senden einer Antwort zu dem Ausgangsteilnehmer in Übereinstimmung mit der empfangenen Antwort;
wobei dann, wenn der Endteilnehmer und der Ausgangsteilnehmer zu unterschiedlichen MSCs in einer CS-Domäne gehören, das Netz die Anforderung zu dem Endteilnehmer, der durch eine PS-Dienstangabe angegeben wird, in Übereinstimmung mit der Anforderung auf die folgende Weise sendet:
eine Ausgangs-MSC, die den Ausgangsteilnehmer bedient, erzeugt eine Inter-MSC-Anforderung in Übereinstimmung mit der Anforderung und sendet die Inter-MSC-Anforderung zu einer End-MSC, die den Endteilnehmer bedient; wobei ein Nachrichtenfeld der Inter-MSC-Anforderung erweitert ist, um die PS-Dienstangabe zu transportieren;
das Netz empfängt die von dem Endteilnehmer gesendete Antwort und sendet die Antwort zu dem Ausgangsteilnehmer in Übereinstimmung mit der empfangenen Antwort auf die folgende Weise:
die Ausgangs-MSC empfängt eine Inter-MSC-Antwort, die von der End-MSC gesendet wird; und
die Ausgangs-MSC erzeugt die Antwort des Endteilnehmers in Übereinstimmung mit der Inter-MSC-Antwort und sendet die Antwort des Endteilnehmers zu dem Ausgangsteilnehmer.

2. Verfahren nach Anspruch 1, wobei:
die Anforderung und die Antwort Anlagennachrichten sind; ein Nachrichtenfeld der Anforderung erweitert ist, um eine PS-Dienstangabe zu transportieren; und ein Nachrichtenfeld der Antwort erweitert ist, um eine Antwort auf die PS-Dienstangabe zu transportieren.

3. Verfahren nach Anspruch 1, wobei das Verfahren, bevor die Ausgangs-MSC die durch die End-MSC gesendete Inter-MSC-Antwort empfängt, ferner Folgendes umfasst:
Empfangen durch die End-MSC der durch die Ausgangs-MSC gesendeten Inter-MSC-Anforderung;
Erhalten durch die End-MSC der Anforderung des Ausgangsteilnehmers in Übereinstimmung mit der Inter-MSC-Anforderung und Senden der Anforderung des Ausgangsteilnehmers zu dem Endteilnehmer; und
Erzeugen durch die End-MSC der Inter-MSC-Antwort in Übereinstimmung mit der von dem Endteilnehmer gesendeten Antwort und Senden der Inter-MSC-Antwort zu der Ausgangs-MSC.

4. Verfahren nach Anspruch 3, wobei:
die Inter-MSC-Anforderung und die Inter-MSC-Antwort FAC-Nachrichten sind; ein Nachrichtenfeld der Inter-MSC-Antwort erweitert ist, um eine Antwort auf die PS-Dienstangabe zu transportieren.

5. Verfahren nach Anspruch 1, wobei das Verfahren, bevor das Netz die Anforderung von dem Ausgangsteilnehmer empfängt, ferner Folgendes umfasst:
Aktivieren durch den Ausgangsteilnehmer eines Paketdatenprotokoll-Kontexts, PDP-Kontexts, und Einrichten eines Datenkanals zwischen dem Ausgangsteilnehmer und einer PS-Domäne.

6. Verfahren nach Anspruch 1, wobei das Verfahren, nachdem das Netz die Anforderung von dem Ausgangsteilnehmer empfangen hat, ferner Folgendes umfasst:
Beurteilen durch das Netz, ob der PS-Dienst zulässig ist, in Übereinstimmung mit Teilnehmerinformationen des Ausgangsteilnehmers, Fortsetzen des PS-Diensts, falls der Dienst zulässig ist, oder Beenden des PS-Diensts, falls der Dienst nicht zulässig ist; oder Bereitstellen von Gebührenbelastungsinformationen, nachdem der PS-Dienst erfolgreich eingerichtet worden ist.

7. Verfahren nach Anspruch 1, das ferner Folgendes umfasst:
Beginnen durch den Ausgangsteilnehmer eines Prozesses des PS-Diensts nach dem Empfang der Antwort; und
automatisches Deaktivieren durch den Ausgangsteilnehmer und den Endteilnehmer eines Paketdatenprotokoll-Kontexts, PDP-Kontexts, nach Abschluss des PS-Diensts.

8. System zum Implementieren paketvermittelter Sitzungsdienste, PS-Sitzungsdienste, das Folgendes umfasst:
einen Ausgangsteilnehmer (10), der konfiguriert ist, eine Anforderung, die PS-Dienstanforderungsinformationen transportiert, zu einem Endteilnehmer (30) zu senden;
eine schaltungsvermittelte Domänenentität, CS-Domänenentität, in einem Netz (20), die konfiguriert ist, die Anforderung von dem Ausgangsteilnehmer (10) zu empfangen und um in Übereinstimmung mit der empfangenen Anforderung eine Anforderung zu dem Endteilnehmer (30) zu senden; eine Antwort von dem Endteilnehmer (30) zu empfangen und eine Antwort zu dem Ausgangsteilnehmer (10) in Übereinstimmung mit der empfangenen Antwort zu senden; und
den Endteilnehmer (30), der konfiguriert ist, die von der CS-Domänenentität gesendete Anforderung in dem Netz (20) zu empfangen und einen Paketdatenprotokoll-Kontext, PDP-Kontext, nach dem Empfang der durch die CS-Domänenentität gesendeten Anforderung in dem Netz (20) zu aktivieren; auf die Anforderung zu antworten, eine Antwort zu erzeugen und die Antwort zu der CS-Domänenentität in dem Netz (20) zu senden;
wobei dann, wenn der Endteilnehmer (30) und der Ausgangsteilnehmer (10) zu unterschiedlichen MSCs in einer CS-Domäne gehören, das Netz (20) die Anforderung zu dem Endteilnehmer, der durch eine PS-Dienstangabe angegeben wird, in Übereinstimmung mit der Anforderung auf die folgende Weise sendet:
eine Ausgangs-MSC, die den Ausgangsteilnehmer bedient, erzeugt eine Inter-MSC-Anforderung in Übereinstimmung mit der Anforderung und sendet die Inter-MSC-Anforderung zu einer End-MSC, die den Endteilnehmer bedient; wobei ein Nachrichtenfeld der Inter-MSC-Anforderung erweitert ist, um die PS-Dienstangabe zu transportieren;
das Netz (20) empfängt die von dem Endteilnehmer (30) gesendete Antwort und sendet die Antwort zu dem Ausgangsteilnehmer (10) in Übereinstimmung mit der empfangenen Antwort auf die folgende Weise:
die Ausgangs-MSC empfängt eine Inter-MSC-Antwort, die von der End-MSC gesendet wird; und
die Ausgangs-MSC erzeugt die Antwort des Endteilnehmers (30) in Übereinstimmung mit der Inter-MSC-Antwort und sendet die Antwort des Endteilnehmers (30) zu dem Ausgangsteilnehmer (10).

9. System nach Anspruch 8, wobei:
die Anforderung und die Antwort Anlagennachrichten sind; ein Nachrichtenfeld der Anforderung erweitert ist, um die PS-Dienstangabe zu transportieren; und ein Nachrichtenfeld der Antwort erweitert ist, um eine Antwort auf die PS-Dienstangabe zu transportieren.

10. System nach Anspruch 8, wobei:
der Ausgangsteilnehmer (10) ferner konfiguriert ist, einen PDP-Kontext zu aktivieren und einen Datenkanal zwischen dem Ausgangsteilnehmer (10) und einem PS-Bereich einzurichten, bevor der Ausgangsteilnehmer (10) die Anforderung zu dem Endteilnehmer (30) sendet.

## Revendications

1. Procédé de mise en oeuvre de services de session à commutation de paquets, PS, comprenant :
la réception, par un réseau, d'une requête d'un correspondant appelant dans un réseau central à commutation de circuits, CS, la requête incluant des informations de requête de service PS ;
l'envoi d'une requête à un correspondant appelé en fonction de la requête reçue ;
l'activation, par le correspondant appelé, d'un contexte de protocole de données par paquets, PDP, après la réception par le correspondant appelé de la requête envoyée par le réseau ; et
la réception d'une réponse du correspondant appelé, et l'envoi d'une réponse au correspondant appelant en fonction de la réponse reçue ;
dans lequel si le correspondant appelé et le correspondant appelant appartiennent à des MSC différents dans un domaine CS, le réseau envoie la requête au correspondant appelé indiqué par une indication de service PS en fonction de la requête de la façon suivante :
un MSC appelant qui dessert le correspondant appelant génère une requête inter-MSC en fonction de la requête, et envoie la requête inter-MSC à un MSC appelé qui dessert le correspondant appelé ; un champ de message de la requête inter-MSC étant étendu pour inclure l'indication de service PS ;
le réseau reçoit la réponse envoyée par le correspondant appelé et envoie la réponse au correspondant appelant en fonction de la réponse reçue de la façon suivante :
le MSC appelant reçoit une réponse inter-MSC envoyée par le MSC appelé ; et
le MSC appelant génère la réponse du correspondant appelé en fonction de la réponse inter-MSC, et envoie la réponse du correspondant appelé au correspondant appelant.

2. Procédé selon la revendication 1, dans lequel :
la requête et la réponse sont des messages de fonction de service ; un champ de message de la requête est étendu pour inclure une indication de service PS ; et un champ de message de la réponse est étendu pour inclure une réponse à l'indication de service PS.

3. Procédé selon la revendication 1, comprenant en outre avant que le MSC appelant ne reçoive la réponse inter-MSC envoyée par le MSC appelé :
la réception, par le MSC appelé, de la requête inter-MSC envoyée par le MSC appelant ;
l'obtention, par le MSC appelé, de la requête du correspondant appelant en fonction de la requête inter-MSC, et l'envoi de la requête du correspondant appelant au correspondant appelé ; et
la génération, par le MSC appelé, de la réponse inter-MSC en fonction de la réponse envoyée par le correspondant appelé, et l'envoi de la réponse inter-MSC au MSC appelant.

4. Procédé selon la revendication 3, dans lequel :
la requête inter-MSC et la réponse inter-MSC sont des messages FAC ; un champ de message de la réponse inter-MSC est étendu pour inclure une réponse à l'indication de service PS.

5. Procédé selon la revendication 1, comprenant en outre, avant que le réseau ne reçoive la requête du correspondant appelant :
l'activation, par le correspondant appelant, d'un contexte de protocole de données par paquets, PDP, et l'établissement d'un canal de données entre le correspondant appelant et un domaine PS.

6. Procédé selon la revendication 1, comprenant en outre, après que le réseau reçoit la requête du correspondant appelant :
le jugement, par le réseau, que le service PS est ou non autorisé en fonction des informations d'abonnement du correspondant appelant, la poursuite du service PS si le service est autorisé ou l'arrêt du service PS si le service n'est pas autorisé ; ou la production d'informations de facturation après l'établissement réussi du service PS.

7. Procédé selon la revendication 1, comprenant en outre :
le lancement, par le correspondant appelant, d'un processus du service PS après la réception de la réponse ; et
la désactivation automatique, par le correspondant appelant et le correspondant appelé, d'un contexte de protocole de données par paquets, PDP, au terme du service PS.

8. Système de mise en oeuvre de services de session à commutation de paquets, PS, comprenant :
un correspondant appelant (10), configuré pour envoyer une requête qui inclut des informations de requête de service PS à un correspondant appelé (30) ;
une entité de domaine à commutation de circuits, CS, sur un réseau (20), configurée pour recevoir la requête du correspondant appelant (10), et envoyer une requête au correspondant appelé (30) en fonction de la requête reçue ; recevoir une réponse du correspondant appelé (30), et envoyer une réponse au correspondant appelant (10) en fonction de la réponse reçue ; et
le correspondant appelé (30), configuré pour recevoir la requête envoyée par l'entité de domaine CS sur le réseau (20), et activer un contexte de protocole de données par paquets, PDP, après la réception de la requête envoyée par l'entité de domaine CS sur le réseau (20) ; répondre à la requête, générer une réponse et envoyer la réponse à l'entité de domaine CS sur le réseau (20) ;
dans lequel si le correspondant appelé (30) et le correspondant appelant (10) appartiennent à des MSC différents dans un domaine CS, le réseau (20) envoie la requête au correspondant appelé indiqué par une indication de service PS en fonction de la requête de la façon suivante :
un MSC appelant qui dessert le correspondant appelant génère une requête inter-MSC en fonction de la requête, et envoie la requête inter-MSC à un MSC appelé qui dessert le correspondant appelé ; un champ de message de la requête inter-MSC étant étendu pour inclure l'indication de service PS ;
le réseau (20) reçoit la réponse envoyée par le correspondant appelé (30) et envoie la réponse au correspondant appelant (10) en fonction de la réponse reçue de la façon suivante :
le MSC appelant reçoit une réponse inter-MSC envoyée par le MSC appelé ; et
le MSC appelant génère la réponse du correspondant appelé (30) en fonction de la réponse inter-MSC, et envoie la réponse du correspondant appelé (30) au correspondant appelant (10).

9. Système selon la revendication 8, dans lequel :
la requête et la réponse sont des messages de fronction de service ; un champ de message de la requête est étendu pour inclure une indication de service PS ; et un champ de message de la réponse est étendu pour inclure une réponse à l'indication de service PS.

10. Système selon la revendication 8, dans lequel :
le correspondant appelant (10) est configuré en outre pour activer un contexte PDP, et établir un canal de données entre le correspondant appelant (10) et un domaine PS, avant que le correspondant appelant (10) n'envoie la requête au correspondant appelé (30).
